# EUROPÄISCHE PATENTSCHRIFT

(11) **EP 0 428 945 B1**
(45) Veröffentlichungstag und Bekanntmachung des Hinweises auf die Patenterteilung: **14.08.1996**
(21) Anmeldenummer: 90121465.0
(22) Anmeldetag: 09.11.1990
(51) Int. Cl.: G05B 19/409, B23Q 15/013, G11B 7/00

(54) **Steuereinrichtung für programmgesteuerte Werkzeugmaschinen**
Control device for programme controlled machine-tool
Dispositif de commande pour machine outil commandé par programme

(30) Priorität: 23.11.1989 DE 3938851
(43) Veröffentlichungstag der Anmeldung: 29.05.1991
(73) Patentinhaber: DECKEL MAHO GmbH, D-87459 Pfronten (DE)
(72) Erfinder: Babel, Werner, W-8962 Pfronten (DE)
(74) Vertreter: Beetz & Partner Patentanwälte

(56) Entgegenhaltungen:
- EP-A- 0 065 918
- EP-A- 0 147 480
- DE-A- 3 839 030
- US-A- 3 766 460
- PATENT ABSTRACTS OF JAPAN vol. 6, no. 156 (P-135)(1034) 17. August 1982 & JP-A-57 73 401

## Beschreibung

Die Erfindung betrifft eine Steuereinrichtung für programmgesteuerte Werkzeugmaschinen der im Oberbegriff des Patentanspruchs 1 angegebenen Gattung.

Moderne programmgesteuerte Werkzeugmaschinen ermöglichen den vollautomatischen Ablauf unterschiedlichster Bearbeitungsvorgänge an kompliziert geformten Werkstücken mit verschiedenartigen automatisch auswechselbaren Werkzeugen. Durch den Wegfall von früher notwendigen Rüstzeiten für z. B. die Werkzeugwechsel sowie durch optimierte Vorschubgeschwindigkeiten konnte bei derartigen komplexen Maschinen die Spanleistung gegenüber herkömmlichen handgesteuerten Maschinen um ein Mehrfaches gesteigert werden. Voraussetzung ist jedoch die sorgfältige Erstellung von Programmen, in denen alle Bewegungen und Vorgänge der Maschineneinzelteile vorab festgelegt werden. Trotz der häufig gegebenen Möglichkeit, die Programme mit Rechnerunterstützung schreiben zu können, ist hierfür regelmäßig ein erheblicher Aufwand von hochqualifiziertem Fachpersonal notwendig.

Um besondere Bearbeitungsvorgänge auch handgesteuert ausführen zu können, sind in der Regel Mittel und Maßnahmen vorgesehen, um die Programmsteuerung außer Funktion zu setzen und auf Handsteuerung umzuschalten. Dabei werden die Antriebsmotoren der verschiedenen Maschinenteile, insbesondere die Vorschubmotoren für den Werkstücktisch bzw. die Werkzeughalterung z. B. durch Eindrücken von im Steuerpult vorgesehenen Druckschaltern in Gang gesetzt und durch Freigeben dieser Druckschalter wieder ausgeschaltet. Obwohl sich diese Vorgehensweise einfach und schnell durchführen läßt, ergeben. sich doch verschiedene Probleme, die zu Bearbeitungsfehlern am Werkstück führen können. Bei dem herkömmlichen Handbetrieb einer einfachen Werkzeugmaschine konnte ein erfahrener Bediener schon durch die Leicht- bzw. Schwergängigkeit der Handkurbeln die am Werkzeug anliegende Belastung und damit auch die Spanleistung abschätzen.Bei übermäßig ansteigender Schwergängigkeit der Handkurbelverdrehung wurden gefühlsmäßig diese Drehbewegungen und damit auch die Vorschubbewegung in der jeweiligen Achse verlangsamt, was eine entsprechend verringerte Spanleistung und Entlastung der Werkzeuge zur Folge hatte. Diese Möglichkeit der gefühlsmäßigen Erfassung der Vorschubbewegungen und damit der Abschätzung der Werkzeugbelastung ist bei den oben erörterten normalerweise programmgesteuerten Werkzeugmaschinen mit Ein- und Ausschaltung der Vorschubmotoren durch Druckschalter nicht mehr gegeben. Durch das Eindrücken bzw. Verstellen dieser Druckschalter lassen sich die jeweiligen Vorschubmotoren lediglich ein- und ausschalten, ohne daß der Bediener Informationen über den tatsächlichen leistungsmäßigen Betriebszustand des jeweiligen Vorschubmotors erhält. Der Bearbeitungsvorgang kann lediglich durch visuelle Beobachtung des Werkzeugangriffs am Werkstück überwacht werden. Diese Möglichkeit der visuellen Überwachung wird jedoch häufig beschränkt durch z. B. Bearbeitungsvorgänge an der dem Bediener abgewandten Rückseite des Werkstücks, durch die Anlagerung von Spülflüssigkeit und Spänen an der Innenfläche der Kabinenfenster, durch eine ungünstige Positionierung des Bedienungspults usw. Diese Probleme können besonders gravierende Auswirkungen bei der Herstellung von größeren Gesenken haben, wenn die Schrupparbeiten im handgesteuerten Betrieb ausgeführt werden. Dabei besteht nämlich die Gefahr, daß die durch die Form des fertigen Gesenks vorgegebenen Endwerte des jeweiligen Achsvorschubs überfahren werden können, was zu nicht behebbaren Fehlern am Werkstück führt.

Aus der EP-A-O 065 918 ist eine Steuereinrichtung für Werkzeugmaschinen bekannt, die als Handräder ausgebildete Schaltelemente zum manuellen Aktivieren der Vorschubmotoren sowie Steuerkreise mit elektronischen Funktionselementen enthält. Auf der Welle jedes Handrades sitzt eine als Bremse wirkende Magnetpulverkupplung und ein digitaler Drehgeber, dessen Ausgangssignale entsprechend der Stellung eines Bereichsschalters mit den Ausgangssignalen eines am bewegten Maschinenteil angeordneten Positionssensors verglichen werden. Die Ausgangssignale dieses Vergleichers werden als Steuersignale für den Vorschubmotor des bewegbaren Maschinenteils verwendet und zusätzlich einem Addierer zugeführt, der gleichzeitig Signale für die Stromaufnahme des Vorschubmotors erhält. Entsprechend den Ausgangssignalen des Addierers erfolgt die Betätigung der Magnetpulverkupplung, welche eine der Verstellung des Handrades entgegenwirkende Bremskraft erzeugt.

In der US-A-3 766 460 ist eine gattungsgemäße Steuereinrichtung für programmgesteuerte Werkzeugmaschinen beschrieben, die Steuerkreise für die einzelnen Vorschubmotoren der beweglichen Maschinenteile aufweist, welche mit der Programmsteuerung verknüpft sind. Jeder Steuerkreis enthält mindestens einen Sensor zum Erfassen eines Leistungsparameters des zugeordneten Vorschubmotors und darüber hinaus ein manuell bewegbares Stellglied in Form eines Handrades, mit dem nicht nur die Positionierung, sondern auch die Vorschubgeschwindigkeit des bewegten Bauteils unabhängig von der Programmsteuerung gesteuert werden kann.

Aufgabe der Erfindung ist es, eine Steuereinrichtung für programmgesteuerte Werkzeugmaschinen und Bearbeitungszentren zu schaffen, die im Handsteuerbetrieb dem Bediener die Möglichkeit für eine gefühlsmäßige Abschätzung und Überwachung der Bearbeitungsvorgänge vermittelt und Beschädigungen der Werkstücke durch Überfahren von Endstellungen ausschließt.

Diese Aufgabe wird durch die im Patentanspruch 1 angegebenen Merkmale gelöst.

Die erfindungsgemäß ausgebildete Steuereinrichtung ermöglicht es einem erfahrenen Bediener, besondere Bearbeitungsvorgänge, wie z.B. Schrupparbeiten bei der Herstellung von Gesenken, in der bei einfachen Werkzeugmaschinen mit reiner Handsteuerung üblichen Weise ausführen zu können. Sobald nämlich während eines Bearbeitungsvorganges der vom Sensor überwachte Leistungsparameter, z.B. das an der Motorwelle wirksame Drehmoment, ansteigt, wird die Bremsvorrichtung entsprechend aktiviert und damit die Leichtgängigkeit der Stellgliedbewegung vermindert. Der Bediener muß demzufolge für eine weitergehende Verstellbewegung des Stellglieds, d.h. eine weitergehende Verdrehung der Handkurbel, eine größere physische Kraft aufwenden oder die Verstellbewegung verlangsamen. Er erhält dadurch ein Gefühl für die vom Vorschubmotor abgegebene Leistung und damit für die am Werkzeug wirksamen Spankräfte. Um sicherzustellen, daß im Handbetrieb die durch die fertige Form des Werkstücks vorgegebenen Endstellungen der Maschinenteile bei jedem Bearbeitungsvorgang nicht überfahren werden, sind gemäß einem weiteren Merkmal der Erfindung die an sich dem Handbetrieb dienenden Steuerkreise der Antriebsmotoren mit der Programmsteuerung derart verknüpft, daß die Vorschubmotoren durch übergeordnete Steuerbefehle aus der Programmsteuerung außer Betrieb gesetzt werden, bevor die durch die Werkstückform vorgegebenen Endlagen erreicht sind. Zu diesem Zweck ist den Steuerkreisen ein ggf. in der Programmsteuerung integrierter Datenspeicher zugeordnet, der für jeden Bearbeitungsvorgang die Daten für die vorgegebenen Endstellungen der bewegten Maschinenteile enthält und vor Erreichen dieser Endstellung Blockiersignale für die Vorschubmotoren erzeugt.

Gemäß einer zweckmäßigen Ausgestaltung können im Speicher die Daten für eine die Oberfläche des ferigbearbeiteten Werkstücks beschreibende Raumkurve abgelegt sein.

Um auch bei ungünstigen Sichtverhältnissen durch die Fenster von Schutzkabinen hindurch den Arbeitsfortgang der Werkzeugmaschine visuell beobachten und überwachen zu können, werden erfindungsgemäß die Stellglieder für die Handsteuerung der einzelnen Vorschubmotoren an einem gesonderten Pult angeordnet, das beispielsweise durch ein Gelenkholmsystem am Maschinenständer angeordnet sein kann und vom Bediener aus einer geeigneten Abstellage in Betriebsposition unmittelbar vor dem Kabinenfenster gebracht werden kann. Da in diesem Fall alle Stellglieder bzw. Handkurbeln bequem zugänglich sind, können die Vorschubbewegungen der Maschinenteile in mehreren Achsen feinfühlig gesteuert werden, ohne daß der Bediener die Beobachtung der Bearbeitungsvorgänge unterbrechen müßte.

Weitere Besonderheiten und Vorzüge der Erfindung sind der folgenden Beschreibung eines Ausführungsbeispiels anhand der Zeichnung entnehmbar. Es zeigen:
- Fig. 1: ein Bearbeitungszentrum mit einem die Stellglieder enthaltenden Pult in perspektivischer Darstellung;
- Fig. 2: schematisch einen Schaltkreis der Steuereinrichtung.

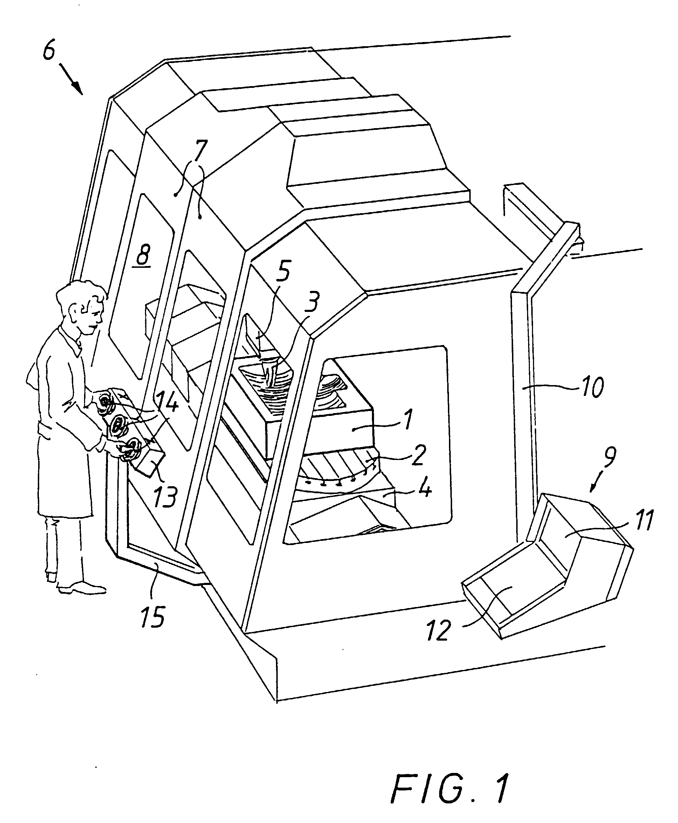

Bei der in Fig. 1 dargestellten Werkzeugmaschine handelt es sich um ein Bearbeitungszentrum zur Herstellung eines relativ großvolumigen Gesenks. Das zu bearbeitende Werkstück 1 ist in herkömmlicher Weise auf einem Werkstücktisch 2 aufgespannt und wird durch einen Vertikalfräser 3 bearbeitet. Die Vorschubbewegungen des Werkstücktischs 2 sowie die Vorschub- bzw. Zustellbewegungen des Fräswerkzeugs 3 in den verschiedenen Koordinatenachsen werden durch - nicht dargestellte - Antriebsmotoren erzeugt, die in herkömmlicher Weise am Maschinenbett 4 bzw. am Maschinenständer angebaut und mit dem Werkstücktisch 2 bzw. dem Fräskopf 5 über z. B. Rollenumlaufspindeln, Riementriebe od. dgl. verbunden sind. Eine Schutzkabine 6 enthält an der Frontseite Schiebetüren 7 mit je einem Fenster 8, die eine visuelle Beobachtung der Werkstückbearbeitung ermöglichen. Ein der - in Fig. 1 nicht dargestellten - Programmsteuerung zugehöriges Steuerpult 9 ist über ein Gelenkholm-Gestänge 10 mit dem Kabinenrahmen oder einem anderen tragfähigen Bauteil verbunden und enthält einen Bildschirm 11 sowie ein Tastenfeld 12. Dieses Steuerpult 9 kann vom Bediener aus seiner dargestellten Ruhestellung in eine günstigere Betriebsstellung bewegt werden und ermöglicht dem Bediener die Überwachung der programmierten Betriebsabläufe sowie ggf. auch Eingriffe in das Programm.

Für den Handsteuerbetrieb ist ein gesondertes Pult 13 mit je einem Handrad 14 für jede der möglichen Koordinatenachsen vorgesehen, das über eine Tragkonstruktion mit einem Schwenkholm 15 aus einer seitlichen Ruheposition in die dargestellte Betriebslage bewegt werden kann. Zusätzlich zu den hier als Handkurbeln ausgebildeten Stellgliedern 14 können in das Pult 13 auch weitere Bauelemente, wie Instrumente oder Anzeigen, Notausschalter od. dgl., eingebaut werden. Darüber hinaus lassen sich auch andere Traghalterungen für das Pult 13 konzipieren, die allerdings eine bequem zugängliche Positionierung dieses Pults etwa in der dargestellten Weise zulassen sollten.

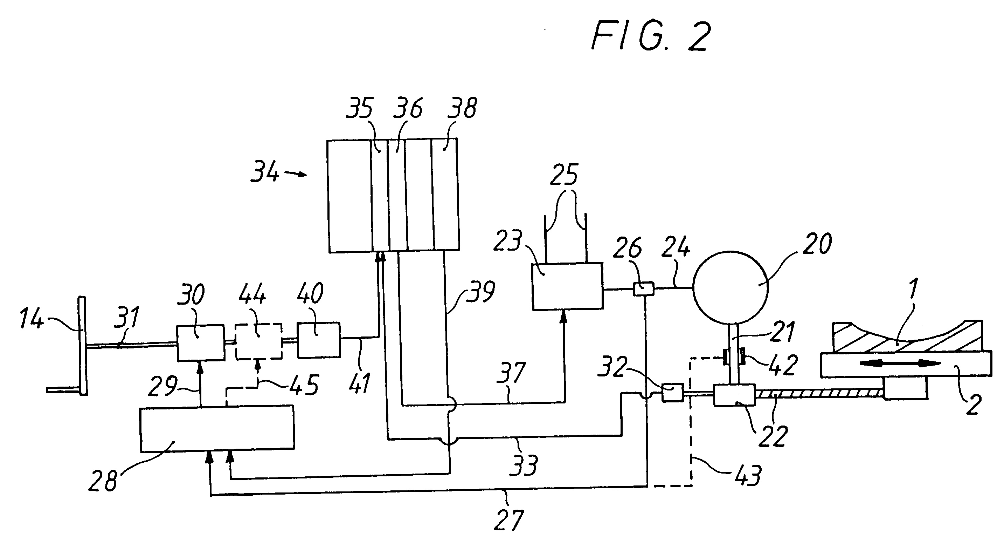

In Fig. 2 ist einer der Hand-Steuerkreise für einen Vorschubmotor 20 dargestellt, dessen Ausgangswelle 21 über einen Spindeltrieb 22 am Werkstücktisch 2 angreift. Der Motor 20 wird über einen Schaltblock 23 und eine Leitung 24 mit Strom aus einer Stromquelle über die Anschlüsse 25 versorgt. In die Leitung 24 ist ein Strom- bzw. Spannungsmesser 26 eingeschaltet, der über eine Leitung 27 an einen Regler 28 angeschlossen ist. Ein Ausgang 29 dieses Reglers 28 führt zu einer Bremse 30, die auf die Welle 31 des Handkurbelrads 14 - bzw. auf ein anderes durch die Kurbel direkt bewegtes Bauelement - einwirkt. Bei der dargestellten Ausführung ist ein Drehgeber 32, der als Wegmesser wirkt und die jeweilige Position des Werkstücktisches 2 angibt, mit dem Spindeltrieb 22 gekoppelt. Die Ausgangssignale dieses Meßgebers 32 werden über eine Leitung 33 einer Programm-Steuereinheit 34 zugeführt. Neben verschiedenen Bearbeitungssektionen 35, 36 für z. B. die Ausgangssignale des Meßgebers 32 bzw. die Ansteuerung des Steuerblocks 23 über eine Leitung 37 enthält die Programm-Steuereinheit 34 einen Speicher 38, der über eine Leitung 39 mit dem Regler 28 verbunden ist.

Die vorstehend beschriebene Hand-Steuerung funktioniert in folgender Weise:

Wenn nach Einschwenken des Pults 13 in die in Fig. 1 gezeigte Stellung von automatischem Betrieb auf handgesteuerten Betrieb durch ein - nicht dargestelltes - Schaltmittel umgeschaltet worden ist, führt eine Verdrehbewegung der Handkurbel 14 zur Aktivierung eines mit der Welle 31 der Handkurbel verbundenen Wandlers 40, der die Drehbewegung der Welle 31 in elektrische Signale umsetzt und diese über eine Leitung 41 der Programm-Steuereinheit 34 zuführt. Durch entsprechende Ausgangssignale aus der Programm-Steuereinheit 34 wird der Steuerblock 23 aktiviert und der Vorschubmotor 20 in Gang gesetzt. Dabei entspricht die vom Motor 20 erzeugte Leistung der Größe der Drehbewegung der Handkurbel 14 mit der Folge, daß der Werkstücktisch 2 bei einer schnellen Handkurbelbewegung mit entsprechend hoher Vorschubgeschwindigkeit verfährt. Die vom Motor erzeugte Leistung ist dem Stromfluß in der Leitung 24 proportional und wird von dem als Strommesser ausgebildeten Sensor 26 erfaßt und über die Leitung 27 dem Regler 28 zugeführt. Sobald die Motorleistung vorgegebene Werte erreicht oder übersteigt, erzeugt der Regler 28 Ausgangssignale, die über den Ausgang 29 ein Einrücken der Bremse 30 bewirken. Diese Bremse 30 übt dabei eine zur Ausgangsleistung des Motors 20 proportionale Hemmkraft auf die Welle 31 der Iiandkurbel 14 aus und vermittelt dem Bediener durch die zunehmende Schwergängigkeit der Handkurbel 14 ein Gefühl für die am Werkstück 1 wirksamen Belastung durch das Fräswerkzeug. Durch verlangsamte Verdrehung der Handkurbel und damit der Vorschubbewegung des Werkstücktisches kann die Leistungsabgabe des Motors und damit auch die Werkstückbelastung vermindert werden.

Zum Erfassen eines Leistungsparameters des Motors 20 kann anstatt oder auch zusätzlich zu dem Stromsensor 26 ein Drehmomentmesser 42 mit der Ausgangswelle 21 des Motors 20 oder auch einem anderen angetriebenen Bauteil gekoppelt sein, dessen Ausgangssignale über eine Leitung 43 dem Regler 28 zugeführt werden. In ähnlicher Weise kann statt der vom Regler 28 angesteuerten Bremse 30 ein ähnlich wie diese wirkender Motor 44 vorgesehen sein, der über einen Ausgang 45 vom Regler 28 angesteuert wird und auf die Welle 31 der Handkurbel 14 einwirkt.

Um unabhängig von der vorstehend beschriebenen Wirkung der Bremse 30 bzw. des Motors 44 ein Überfahren einer durch die Form des fertigen Gesenks vorgegebenen Endstellung des Werkstücktisches 2 zu vermeiden, sind im Speicher 38 der Programm-Steuerung 34 Daten für die Endstellungen des Werkstücktisches 2 für jede im Handsteuerbetrieb ausgeführte Bearbeitungsoperation eingegeben. Sobald der bei der dargestellten Ausführung auf der Welle 31 der Handkurbei 14 befindliche Meßgeber 32, der auch an einer anderen geeigneten Stelle, z. B. am Werkstücktisch 2 oder im Bereich der Antriebsspindel vorgesehen sein kann, anzeigt, daß der Werkstücktisch in die Nähe dieser vorgegebenen Endlage fährt, wird von der Programm-Steuereinheit ein Signal über die Leitung 39 dem Regler 28 zugeführt, das ein volles Einrücken der Bremse 30 und damit ein zwangsweises Stillsetzen der Welle 31 hervorruft. Damit wird auch ein Weiterlaufen des Antriebsmotors 20 verhindert. Eine gleichwertige Wirkung läßt sich auch erreichen, wenn dem Steuerblock 23 entsprechende Ausschalt-Signale von der Programm-Steuereinheit 34 zugeführt werden.

Die Erfindung ist nicht auf die vorstehend beschriebenen Ausführungsbeispiele beschränkt. So kann beispielsweise eine Verknüpfung der Ausgangsleistung des Motors 20 mit einem die Verdrehbewegung der Handkurbel 14 proportional beeinflussenden Organ auch durch hydraulische Steuermittel erfolgen. Darüber hinaus läßt sich das erfindungsgemäße Konzept auch bei Werkzeugmaschinen mit einfacheren NC-Steuerungen verwirklichen, wobei in diesem Fall die bei dem dargestellten Ausführungsbeispiel in die ProgrammSteuereinheit 34 integrierten Sektionen durch gesonderte Baugruppen ersetzt werden könnten.

## Patentansprüche

1. Steuereinrichtung für programmgesteuerte Werkzeugmaschinen, mit Steuerkreisen für die einzelnen Vorschubmotoren (20) der beweglichen Maschinenteile (2), die mit der Programmsteuerung verknüpft sind und jeweils mindestens einen Sensor (26; 42) zum Erfassen eines Leistungsparameters (I, M) des zugeordneten Vorschubmotors (20) sowie zusätzlich manuell bewegbare Stellglieder (14) zum Aktivieren der Vorschubmotoren (20) enthalten,
**dadurch gekennzeichnet,**
daß dem Stellglied (14) eine von den Ausgangssignalen des Sensors (26; 42) angesteuerte Bremsvorrichtung (30; 44) zugeordnet ist und daß jedem Steuerkreis ein Datenspeicher (38) zugeordnet ist, der für jeden Bearbeitungsvorgang die Daten für die vorgegebenen Endstellungen der bewegten Maschinenteile (2) enthält und vor Erreichen dieser Endstellung Blockiersignale für die Vorschubmotoren (20) erzeugt.

2. Steuereinrichtung nach Anspruch 1,
dadurch gekennzeichnet,
daß im Speicher (38) die Daten für eine die Oberfläche des fertigbearbeiteten Werkstücks (1) beschreibende Raumkurve abgelegt sind.

3. Steuereinrichtung nach einem der Ansprüche 1 oder 2,
dadurch gekennzeichnet,
daß der Sensor (26) den Betriebsstrom des Vorschubmotors (20) erfaßt und mit einem Regler (28) gekoppelt ist, der die Bremsvorrichtung (29, 44) steuert.

4. Steuereinrichtung nach einem der Ansprüche 1 bis 3,
dadurch gekennzeichnet,
daß an der Ausgangswelle (21) des Vorschubmotors (20) ein Drehmomentmesser (42) als Sensor vorgesehen ist.

5. Steuereinrichtung nach einem der Ansprüche 1 bis 4,
dadurch gekennzeichnet,
daß der Steuerkreis einen Wegmesser (32) zum Erfassen der Vorschubposition des bewegten Maschinenteils (2) enthält.

6. Steuereinrichtung nach einem der Ansprüche 1 bis 5,
dadurch gekennzeichnet,
daß die als Handräder ausgebildeten Stellglieder (14) an einem vor dem Arbeitsbereich der Werkzeugmaschine positionierbaren Pult (13) angeordnet sind.

## Claims

1. A control device for program-controlled machine tools, comprising control circuits for the individual motors (20) for advancing the moving parts (2) of the machine, the control circuits being connected to the program control unit and each containing at least one sensor (26; 42) for detecting a performance parameter (I, M) of the associated motor (20) and additionally manually movable actuators (14) for activating the motors (20), characterised in that the actuator (14) is associated with a braking device (30; 44) actuated by the output signals from the sensor (26; 42) and each control circuit is allocated a data memory (38) which contains the data for the preset final positions of the moving parts (2) for each machining operation and generates signals which stop the motors (20) before the final position is reached.

2. A control device according to claim 1, characterised in that the data for a three-dimensional curve describing the surface of the finally-machined workpiece (1) are deposited in the memory (38).

3. A control device according to claim 1 or 2, characterised in that the sensor (26) detects the current operating the motor (20) and is coupled to a controller (28) which actuates the braking device (29, 44).

4. A control device according to any of claims 1 to 3, characterised in that a sensor in the form of a torque meter (42) is provided on the output shaft (21) of the motor (20).

5. A control device according to any of claims 1 to 4, characterised in that the control circuit contains a travel meter (32) for detecting the position to which the moving machine part (2) has advanced.

6. A control device according to any of claims 1 to 5, characterised in that the actuators (14), which are in the form of handwheels, are disposed on a desk (13) which can be positioned in front of the working zone of the machine tool.

## Revendications

1. Dispositif de commande pour machines-outils à commande programmable comprenant des circuits de commande pour les différents moteurs d'avance (20) des parties mobiles (2) de la machine, qui sont reliés à la commande programmable et comportent chacun au moins un capteur (26, 42) pour la détection d'un paramètre de puissance (I, M) du moteur d'avance (20) associe ainsi que des éléments de réglage (14) pouvant être déplacés manuellement pour activer les moteurs d'avance (20), caractérisé en ce qu'un organe de freinage (30, 44) commandé par les signaux de sortie du capteur (26, 42) est associé à l'élément de réglage (14) et en ce qu'une mémoire de données (38) est associée à chaque circuit de commande, ladite mémoire contenant, pour chaque étape de traitement, les données pour les fine de course prédéterminées des parties mobiles (2) de la machine, et produisant des signaux de blocage pour les moteurs d'avance (20) avant que cette fin de course ne soit atteinte.

2. Dispositif de commande suivant la revendication 1, caractérisé en ce que la mémoire (38) reçoit les données pour une courbe en trois dimensions décrivant la surface de la pièce (1) terminée.

3. Dispositif de commande suivant l'une des revendications 1 ou 2, caractérisé en ce que le capteur (26) détecte le courant de service du moteur d'avance (20) et est couplé avec un régulateur (28) qui commande l'organe de freinage (29, 44).

4. Dispositif de commande suivant l'une des revendications 1 à 3, caractérisé en ce qu'un couplemètre (42) est prévu comme capteur sur l'arbre de sortie (21) du moteur d'avance (20).

5. Dispositif de commande suivant l'une des revendications 1 à 4, caractérisé en ce que le circuit de commande comporte un capteur de déplacement; (32) pour détecter la position d'avance de la partie de machine (2) déplacée.

6. Dispositif de commande suivant l'une des revendications 1 à 5, caractérisé en ce que les éléments de réglage (14) réalisés sous la forme de volants à main sont disposés sur un pupitre (13) pouvant être placé devant la zone de fonctionnement de la machine-outil.
